# EUROPEAN PATENT APPLICATION

(11) **EP 4 119 410 A1**
(43) Date of publication of application: **18.01.2023**
(21) Application number: 21185928.5
(22) Date of filing: 15.07.2021
(51) Int. Cl.: B60W 30/182, B60W 10/06, B60W 10/04, B60W 10/22, B60W 10/30, B60W 50/08, B60G 17/0195, B60Q 1/08

(54) **METHOD FOR CONTROLLING THE CONFIGURATION OF A TRUCK**

(71) Applicant: VOLVO TRUCK CORPORATION, 405 08 Göteborg (SE)
(72) Inventor: PERRAUD, Nicolas, 69740 GENAS (FR); QUIBRIAC, Yann, 69007 LYON (FR)
(74) Representative: Plasseraud IP

(57) **Abstract**

Method for controlling the configuration of a truck (1), the truck comprising:
- a chassis,
- a ground-linking system connecting the chassis to the ground, the ground-linking system including at least four wheels and a suspension arrangement,
- a powertrain system for driving the wheels,
wherein the method comprises steps of:
a) identifying whenever the truck enters into or leaves from a specific area (3, 4), such as off-road area or private area closed to public ,
b) - modifying the truck configuration accordingly, by modifying simultaneously a set of configuration parameters ,
wherein the set of configuration parameters comprises at least two different configuration parameters related respectively to the ground-linking system and the powertrain system.

## Description

### Technical Field

This disclosure pertains to the field of trucks operating in different operating conditions.

### Background Art

A truck basically comprises a chassis mounted on a ground-linking system including at least two axles and a suspension arrangement to link the chassis to the ground. The truck also comprises a powertrain system including at least an engine and a transmission system, having in particular a gear shift and differential, to drive the wheels. Nowadays, trucks are further equipped with many other systems aiming at providing the driver with enhanced driving assistance and/or comfort, and/or providing the driver and possibly nearby individuals with enhanced safety. For example, driving assistance and safety systems are provided for assisting the driver in direction and brake operations, such as an Electronic Stability Program (ESP) and/or an Anti-Blocking System (ABS), and for improving visibility to the driver and nearby individuals, such as a Camera Monitoring System (CMS), , a Vulnerable Road User (VRU) detection, the line keep system (LKS), a lighting system and/or a beacon. Comfort systems can further be provided for improving comfort of the driver, such as an air conditioning system.

All these systems have each different settings forming an assembly of many configuration parameters that can be set separately by the driver depending on the operating condition of the truck.

Setting all these configuration parameters to have a configuration of the truck that best suits the operating condition of the truck is burdensome, time-consuming and difficult to manage for the driver.

### Summary

This disclosure improves the situation.

It is proposed a method according to claim 1.

The invention proposes prestored truck configurations/profiles, associated each with a specific set of configuration parameters. A preconditioning of the truck according to its usage is proposed. Therefore, the method of the invention enables to modify a bunch of configuration parameters simultaneously, in one sole operation.

Further features of the method according to the invention, which are advantageous but not compulsory, are described in dependent claims 2 to 13.

### Brief Description of Drawings

Other features, details and advantages will be shown in the following detailed description and on the figures, on which:
- figure 1 is a schematic representation of a truck moving between different operating situations to which respective different sets of configuration parameters of the truck are associated,
- figure 2 is a flowchart of a method for controlling configuration of the truck according to an embodiment, the configuration being controlled according to the operating situation.

### Description of Embodiments

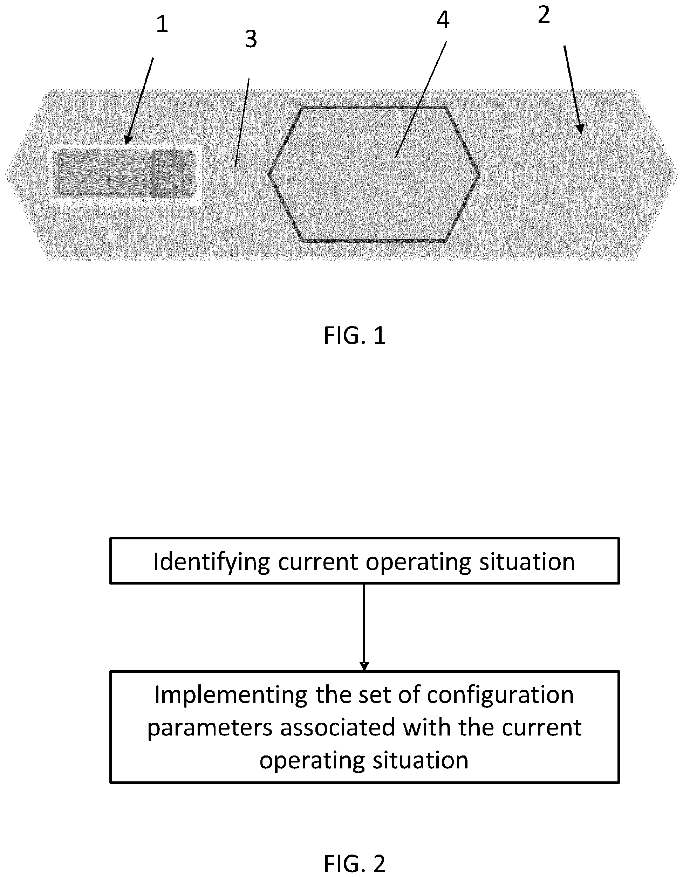

Figure 1 represents a truck 1 moving on a ground 2. The truck 1 can be operated in different areas/locations. In the example of figure 1, the truck 1 is moving from a first specific area/location 3 into a second specific area/location 4. In this example, the first specific area/location 3 is a public road, i.e. a road open to public and the second specific area/location 4 is a private road closed to public. This private road can be part of the following specific areas: Mines, construction site, Logistic center, Harbor, etc.

The truck 1 comprises a chassis mounted on a ground-linking system including at least wheels and a suspension arrangement to connect the chassis to the ground. The truck 1 also comprises a powertrain system including a motor (thermal engine or electric motor) and a transmission system, having in particular a gear shift and differentials, to drive the wheels.

The truck 1 is further equipped especially with driving assistance and safety systems for assisting the driver in driving operations and for securing these driving operations. Examples of such driving assistance and safety systems are an electronic stability program (ESP) and an anti-blocking system (ABS) that assist and secure direction and brake operations. Other safety systems, such as a camera monitoring system (CMS) to monitor surroundings of the truck 1, a Vulnerable Road User (VRU) detection with a camera on the front and radars on the side of truck 1, the Line Keep System (LKS) with a camera at the front of truck 1, a lighting system to enlighten surroundings of the truck 1 and a beacon, aim at ensuring safety of the driver and of nearby individuals by improving visibility to the driver and nearby individuals. In addition to these systems, the truck 1 may also be equipped with comfort systems for improving comfort of the driver, such as an air conditioning system.

To control these different systems, the truck 1 comprises an Electronic Control Unit (ECU) for storing a plurality of different truck configurations/profiles, each truck configuration/profile being characterized by a set of configuration parameters whose status/value depends on the selected truck profile. As a general rule, each truck configuration is assigned to a specific location/area. By default, the truck is configured with a profile adapted to asphalted public roads.

In the meaning of the invention, the truck profiles/configurations are not necessarily stored in a memory within the truck 1. The truck profiles can be stored inside a remote memory with which the control unit of the truck 1 is in communication with (e.g. remote server). In particular, among possible others, the plurality of truck configurations/profiles comprises a default profile associated with public asphalted roads and a specific driving configuration/profile associated with a specific location/area, such as off-road area or private area. A private area is an area/location closed to public. Private areas are therefore not accessible to the public. They are usually delimited by barriers and a sign panel is usually at the entrance. For instance, mine sites, construction areas, harbor, airports, logistic center and the like are private areas.

Typically, a specific truck configuration/profile can be assigned to each specific location/area stored in memory, such as: Mine site, construction site, logistic center, harbor, etc. This means that the truck configuration can be different depending on the truck location.

As indicated above, each truck profile/configuration is characterized by a set of configuration parameters that comprises at least two different configuration parameters related respectively to the ground-linking system and the powertrain system. For example, the configuration parameter related to ground-linking system acts on the suspension arrangement to change the ground clearance of the truck 1 as a function of the truck location and the configuration parameter related to powertrain system acts on at least one of the engine and the transmission system as a function of the truck location. In addition, one or several of the sets of configuration parameters comprise at least one configuration parameter related to one of the driving assistance and/or safety and/or comfort systems. For example, as regards the powertrain system, the configuration parameters may include maximum engine speed, maximum engine torque or other. As regards the lighting system, the configuration parameters may include switching on or off specific outside lights: high beam, DRL, low beam, beacon or other.

For a pure illustrative non-limitative purpose, the table below shows how configuration parameters can vary as a function of selected truck profile.

| Configuration parameters | Default configuration | Specific configuration |
|---|---|---|
| Day running light | ON | OFF |
| Low beam | OFF | ON |
| Beacon | OFF | ON |
| Max speed | 90km/h | 50km/h |
| Engine speed | Economy mode | Power mode |
| Gear shifting | Economy mode | Power mode |
| Differential inter axels | OFF | ON |
| Differential inter wheels | OFF | ON |
| Air recycling | OFF | ON |
| Suspension level | Drive level | High level |
| Power take off | OFF | ON |
| Information "truck is in a working area" | OFF | ON |
| Rear under protection device | Low position | High position |
| Vunerable road user functions | ON | OFF |
| ESP | ON | OFF |
| Brake blending | ON | OFF |

Figure 2 illustrates a method for controlling the configuration of the truck 1 based on the stored sets of configuration parameters.

The method first comprises a first step a) of identifying whenever the truck enters into (or approaches) or leaves from a specific location or area, such as an off-road area or a private area (e.g. industrial area). For instance, said specific location or area can be a mine site, a construction site, a harbor, an airport, a military site, a logistic center, etc.

Step a) can be performed automatically using a global positioning system (GPS) of the control unit in order to determine a position of the truck 1. The control unit may then be configured to determine whether the truck 1 approaches or enters into a specific location or site, such as an off-road area or a private area/industrial area (closed to public). In complementary or alternative manner, the control unit may be configured to determine whenever the truck enters into said specific location or area to which it is referred to above using images of the surroundings of the truck 1 acquired by any one of the aforementioned cameras, e.g. CMS (replacing outside side mirrors), LKS camera or VRU camera.

Indeed, it is now common that the truck includes cameras replacing outside mirrors. It is therefore easy to process the images captured by the truck cameras in order to identify, for example, a road sign such as "CONSTRUCTION SITE", "PRIVATE AREA", "MINE SITE", "HARBOR", etc. Image processing is now part of general knowledge, that is why the algorithm and techniques that are used to identify said road signs are not further detailed herein. Basically, it can be envisaged to implement a reading function into the electronic control unit so that the road signs can be read and processed by the system. As a result, it is possible to automatically determine whenever the truck is entering into a restricted/specific area, without any human intervention.

Triggering of this step a) of identification can therefore be implemented in an automated manner. The control unit is then configured to monitor continuously the current operating situation of the truck 1, possibly based on its position and/or the images of the surroundings.

Alternatively, the step a) of identification can be achieved/triggered manually. In such case, an operating element, such as a push button or a rotating button, enables a user to change the truck configuration/profile. For instance, said operating element can be located on the vehicle dashboard. By using the operating element, such as a switch, a touch screen or other, the driver can select one of the truck configurations or profiles stored in memory.

In a variant, the step a) of identification can be achieved by a remote operator, such as a manager of a fleet of trucks, the control unit including a communication interface configured to communicate with the remote operator. Typically, said communication interface is a remote server to which each truck of the fleet is connected through internet.

As soon as the truck configuration/profile is selected, the electronic control unit selects the associated set of configuration parameters and proceed with the step of implementing this set of configuration parameters. Preferably, the implementation of the new truck configuration/profile is completed while the vehicle is at standstill.

Obviously, the truck configuration or profile returns to the default configuration as soon as the truck leaves the specific location or area to which it is referred to. In other words, the truck configuration changes when the truck rejoins public road.

To continuously improve an adequation between the set of configuration parameters and the operation situation, one or several of the configuration parameters of each set of configuration parameters can be adapted automatically by the control unit or manually by the driver or the remote operator. This means that a few parameters can be added to or removed from the list of configuration parameters that are changed when a new profile is selected.

Besides, where needed, one or several new sets of configuration parameters associated with one or several new operating situations can be recorded.

The adapted set of configuration parameters or the new set of configuration parameters can be saved within the control unit of the truck or in a remote server the control unit is in communication with or directly shared with other trucks of the fleet.

## Claims

1. Method for controlling the configuration of a truck, the truck comprising:
- a chassis,
- a ground-linking system connecting the chassis to the ground, the ground-linking system including at least four wheels and a suspension arrangement,
- a powertrain system for driving the wheels,
wherein the method comprises steps of:
a) identifying whenever the truck enters into or leaves from a specific area, such as off-road area or private area closed to public ,
b) - modifying the truck configuration accordingly, by modifying simultaneously a set of configuration parameters ,
wherein the set of configuration parameters comprises at least two different configuration parameters related respectively to the ground-linking system and the powertrain system.

2. Method according to claim 1, further comprising a step of recording a new set of configuration parameters associated with a new specific area.

3. Method according to claim 1 or 2, wherein step a) is achieved automatically by monitoring the location of the truck based on GPS data or by using information provided by one or more cameras on-board of the truck.

4. Method according to claim 1 or 2, wherein step a) is achieved manually using a control element, such as a push button.

5. Method according to claim 4, wherein step a) is achieved by a driver of the truck.

6. Method according to claim 4, wherein step a) is achieved by a remote operator using wireless communications means, such as internet.

7. Method according to any of claims 1 to 6, wherein the truck includes a camera monitoring system able to acquire images of surroundings of the truck and an electronic control unit configured to determine the location of the truck as a function of the images of the surroundings of the truck.

8. Method according to any of claims 1 to 7, wherein the configuration parameter related to ground-linking system is a suspension arrangement acting on ground clearance.

9. Method according to any of claims 1 to 8, wherein the powertrain system includes at least an engine and a transmission system, the configuration parameter related to powertrain system being maximum engine speed or torque.

10. Method according to any previous claim, wherein the truck comprises a lighting system configured to enlighten surroundings of the truck and wherein at least one of the configuration parameters is related to the lighting system.

11. Method according to any previous claim, wherein the truck comprises at least one driving assistance system and wherein at least one of the configuration parameters is related to the driving assistance system.

12. Method according to any previous claim, wherein the truck comprises at least one safety system and wherein at least one of the configuration parameters is related to the safety system.

13. Method according to any previous claim, wherein the truck comprises at least one comfort system such as HVAC and wherein at least one of the configuration parameters is related to the comfort system.
